# EUROPÄISCHE PATENTSCHRIFT

(11) **EP 1 280 684 B1**
(45) Veröffentlichungstag und Bekanntmachung des Hinweises auf die Patenterteilung: **31.08.2005**
(21) Anmeldenummer: 01938171.4
(22) Anmeldetag: 05.05.2001
(51) Int. Cl.: B60R 22/44, B60R 22/46

(54) **SICHERHEITSGURTAUFROLLER MIT EINEM REVERSIBLEN GURTSTRAFFER**
SAFETY BELT WINDER WITH A REVERSIBLE BELT TENSIONER
ENROULEUR DE CEINTURE DE SECURITE A TENDEUR REVERSIBLE

(30) Priorität: 10.05.2000 DE 10022679
(43) Veröffentlichungstag der Anmeldung: 05.02.2003
(73) Patentinhaber: AUTOLIV DEVELOPMENT AB, 447 83 Vargarda (SE)
(72) Erfinder: LUCHT, Andreas, 25358 Horst (DE); JUCHEM, Alois, 82272 Moorenweis (DE); WITTENBERG, Geert, Helge, 22337 Hamburg (DE); ZIEL, Erik, 25451 Quickborn (DE); KÄLLHAMMER, Jan-Erik, S-58234 Linköping (SE)
(74) Vertreter: Müller, Karl-Ernst
(86) Internationale Anmeldenummer: PCT/EP2001/005088
(87) Internationale Veröffentlichungsnummer: WO 2001/085495

(56) Entgegenhaltungen:
- WO-A-95/27638
- DE-A- 4 332 205
- GB-A- 2 333 077
- US-A- 5 615 917
- US-A- 5 772 246
- "SICHERHEITSGURTSYSTEM" ATZ AUTOMOBILTECHNISCHE ZEITSCHRIFT, FRANCKH'SCHE VERLAGSHANDLUNG. STUTTGART, DE, Bd. 93, Nr. 4, April 1991 (1991-04), Seite 218 XP000212510 ISSN: 0001-2785

## Beschreibung

Die Erfindung betrifft ein Sicherheitsgurtsystem in Kraftfahrzeugen mit wenigstens einem Gurtaufroller, dessen Gurtwelle über eine zwischengeschaltete Kupplung mit einem Elektromotor kuppelbar ist, der die Gurtwelle bei Zuschaltung in Aufwickelrichtung dreht, um in einem ersten Betriebszustand beim Ablegen des Sicherheitsgurtes das Gurtband in eine auf der Gurtwelle aufgewickelte Parkposition zu bringen und um in einem zweiten Betriebszustand in Abhängigkeit von der jeweiligen Fahrsituation durch Gurtbandeinzug als Vorstraffung eine vorhandene Gurtlose zu beseitigen und dem angeschnallten Insassen ein fühlbares Warnsignal zu geben, wobei der Gurtaufroller eine in Aufwickelrichtung des Gurtbandes wirksame Aufwickelfeder aufweist.

Ein Sicherheitsgurtsystem mit den vorgenannten Merkmalen ist in der DE 43 32 205 A1 beschrieben. Bei dem bekannten Sicherheitsgurtsystem ist die Funktion der im Unfallgeschehen bzw. einer Notsituation auszulösenden Leistungsstraffung gesondert von dem Gurtaufroller angeordnet, indem eine entsprechende Straffvorrichtung an dem Gurtschloß des Sicherheitsgurtsystems angreift. Die Gurtwelle des Gurtaufrollers ist mit einem Elektromotor als in unterschiedlichen Betriebszuständen wirksamer Antrieb kuppelbar, der unterschiedliche Funktionen übernimmt.

Bei angelegtem Sicherheitsgurt soll der Elektromotor zunächst einen Komfortzustand einstellen, indem die Kraft einer üblicherweise mit einer Federkraft von circa drei Newton ausgelegten Aufwickelfeder als Rückstellfeder gemildert werden soll; hierzu übt der Elektromotor ein in Abwickeldrehrichtung der Gurtwelle wirksames Gegendrehmoment aus. Beim Ablegen des Sicherheitsgurtes übernimmt der Elektromotor nach einer insoweit erforderlichen Drehrichtungsumkehr das Aufwickeln des Gurtbandes auf der Gurtwelle bis in dessen Parkposition. Schließlich ist auch vorgesehen, daß der Gurtaufroller in Betriebszuständen beim Fahrbetrieb eines Kraftfahrzeuges, bei denen Geschwindigkeitsänderungen unterhalb der für die Auslösung der Leistungsstraffung herangezogenen kritischen Geschwindigkeitsänderung auftreten, bei denen aber gleichwohl eine Vorstraffung mit einer Beseitigung vorhandener Gurtlose beabsichtigt ist, um einerseits den angeschnallten Insassen im Hinblick auf die Auslegung der Leistungsstraffung richtig zu positionieren und um andererseits dem Insassen ein Gefühl aktiver Sicherheit zu geben, die Gurtwelle aktiv und mit einem entsprechenden Drehmoment in Aufwickelrichtung dreht.

Soweit in Kraftfahrzeugen auch ein oberer Umlenkbeschlag für den Sicherheitsgurt integriert ist, wie er in der gattungsbildenden DE 43 32 505 A1 dargestellt ist, liegt der Erfindung die Aufgabe zugrunde, ein Sicherheitsgurtsystem mit den eingangs genannten Merkmalen so auszugestalten, daß der Umlenkbeschlag ohne einen großen Mehraufwand in seiner Höhe einstellbar ist.

Die Lösung dieser Aufgabe ergibt sich aus dem Anspruch 1; vorteilhafte Ausgestaltungen und Weiterbildungen der Erfindung sind in den Unteransprüche angegeben.

Die Erfindung sieht hierzu vor, daß der als in zwei Drehrichtungen Drehmomente übertragender Motor ausgebildete Elektromotor über eine zwischengeschaltete Getriebestufe an einen in Abhängigkeit von Insassendaten steuerbaren Antrieb für die Höheneinstellung des oberen Umlenkbeschlages zuschaltbar ist. Mit der Erfindung ist der Vorteil verbunden, daß der im Rahmen des Gurtaufrollers für das Aufwickeln des abgelegten Gurtbandes und die Vorstraffung ohnehin vorgesehene Elektromotor auch für die Höhenverstellung des oberen Umlenkbeschlages nutzbar ist. Soweit hierzu erforderlich ist, daß der Elektromotor als in zwei Drehrichtungen Drehmomente übertragender Elektromotor ausgebildet ist, wird der bezogen auf den Elektromotor erforderliche Mehraufwand ausgeglichen durch die Möglichkeit, eine weitere Funktion innerhalb des Sicherheitsgurtsystems, nämlich die Höheneinstellung des den Schultergurt tragenden Umlenkbeschlages vorzunehmen. Da die Höheneinstellung unabhängig von der Funktion des Gurtaufrollers ist, ist zwischen Elektromotor und Höhenverstellvorrichtung eine Getriebestufe zur Ansteuerung der Höhenverstellvorrichtung einzusetzen.

Nach einem Ausführungsbeispiel der Erfindung kann vorgesehen sein, daß der Antrieb für die Höheneinstellung des Umlenkbeschlages als eine vom Elektromotor in der zugeordneten Schaltstellung des Getriebes in Rotation versetzte flexible Welle ausgebildet ist, deren Drehbewegung getrieblich in eine Längsverschiebung des Umlenkbeschlages umsetzbar ist.

Im einzelnen kann vorgesehen sein, daß der Elektromotor als schaltbarer Planetengetriebemotor ausgebildet ist.

Da gemäß dem Erfindungsgedanken zunächst die Anordnung einer Straffvorrichtung für die Leistungsstraffung nicht notwendig getroffen sein muß, ist nach einem Ausführungsbeispiel der Erfindung vorgesehen, daß in dem Sicherheitsgurtsystem zusätzlich eine Straffvorrichtung für eine in einer Notsituation auszulösende Leistungsstraffung angeordnet ist, wie dies in der gattungsbildenden DE 43 32 205 A1 im Grundsatz beschrieben ist. Dabei kann nach einem Ausführungsbeispiel der Erfindung die für die Leistungsstraffung vorgesehene Straffvorrichtung außerhalb des Gurtaufrollers angeordnet sein, beispielsweise am Schloß oder an einem Endbeschlag, oder die für die Leistungsstraffung vorgesehene Straffvorrichtung kann auf die Gurtwelle des Gurtaufrollers einwirken. In diesem Fall ist nach einem Ausführungsbeispiel der Erfindung vorgesehen, daß die für die Leistungsstraffung vorgesehene Straffvorrichtung über eine Strafferkupplung an die Gurtwelle des Gurtaufrollers ankuppelbar ist; hiermit wird eine kompakte Bauform des Gurtaufrollers erreicht, indem die beim gattungsbildenden Stand der Technik extern angeordnete Straffvorrichtung in den Gurtaufroller integriert ist.

Nach einem Ausführungsbeispiel der Erfindung kann der Strafferantrieb der Straffvorrichtung als Seilantrieb mit einem linear angetriebenen Kolben ausgebildet sein. Alternativ ist vorgesehen, daß der Strafferantrieb der Straffvorrichtung als Massekörperantrieb mit über ein verzahntes Antriebsrad geführten Massekörpern ausgebildet ist, wie dies im einzelnen in der WO 95/27638 beschrieben ist.

In der Zeichnung ist ein Ausführungsbeispiel der Erfindung wiedergegeben, welches nachstehend beschrieben ist; es zeigen:
- Fig. 1: einen Gurtaufroller mit Elektromotor in einer Gesamtansicht,
- Fig. 2: den Gurtaufroller gemäß Figur 1 in einer geschnitten Seitenansicht,
- Fig. 3: den Gurtaufroller gemäß Figur 1 mit einer zusätzlich an den Elektromotor angeschlossenen Höhenverstellvorrichtung.

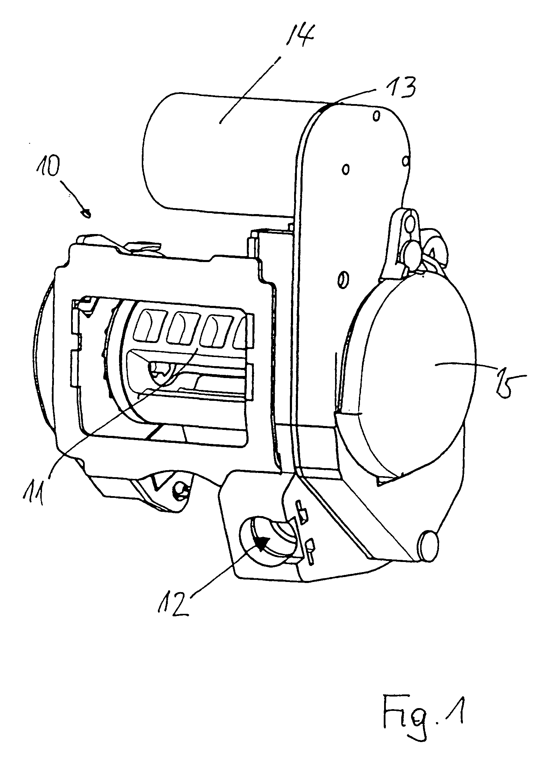

Wie der in Fig. 1 dargestellten Gesamtansicht zu entnehmen ist, weist der Gurtaufroller 10 eine Gurtwelle auf, auf der ein nicht dargestelltes Gurtband eines Sicherheitsgurtes aufgewickelt ist. Dem einen Ende der Gurtwelle 11 kann eine Straffvorrichtung für die Leistungsstraffung zugeordnet sein, die als sogenannter pyrotechnischer Kugelstraffer ausgebildet ist, wie ein derartiger Kugelstraffer in seiner konstruktiven Ausbildung in der WO 95/27638 im einzelnen beschrieben ist. Dieser Kugelstraffer ist nicht Gegenstand der vorliegenden Erfindung und ist in der Zeichnung nicht dargestellt; bei Auslösung in einer Notsituation dreht die Straffvorrichtung die Gurtwelle 11 in Aufwickelrichtung des Gurtbandes, um im Sicherheitsgurtsystem befindliche Gurtlose zu beseitigen.

An dem Gurtaufroller 10 ist eine Halteplatte 13 befestigt, die als Träger für einen Elektromotor 14 dient. Auf der Außenseite der Halteplatte 13 deckt eine Federkappe 15 eine noch zu beschreibende Aufwickelfeder ab.

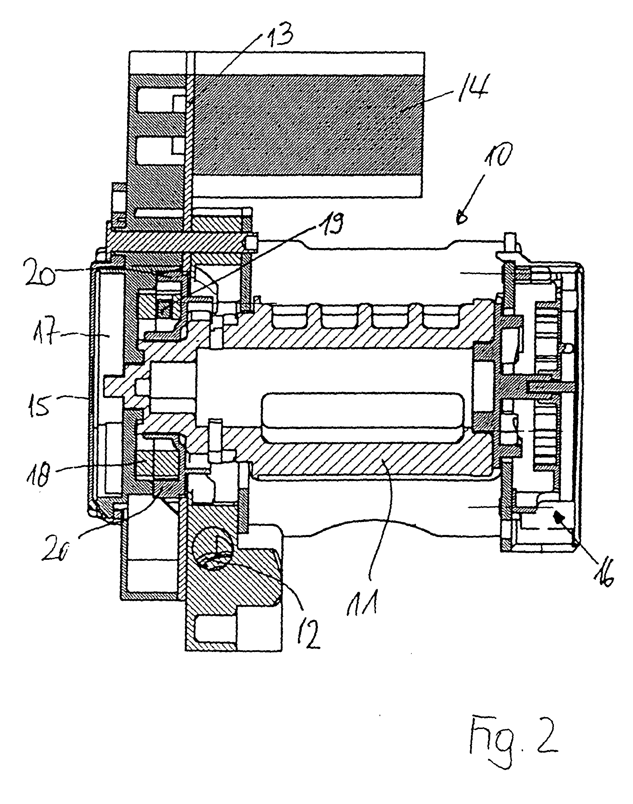

Der Aufbau des Gurtaufrollers im einzelnen ist Fig. 2 zu entnehmen. An dem einer Kraftbegrenzungseinrichtung 12 bekannter Bauart zugeordneten Ende ist in der Regel ein gurtbandsensitiv bzw. fahrzeugsensitiv arbeitendes Steuersystem 16 angeordnet, welches im normalen Fahrbetrieb des Fahrzeuges in üblicher Weise arbeitet. An dem der Kraftbegrenzungseinrichtung 12 zugewandten Ende der Gurtwelle 11 greift eine von der Federkappe 15 abgedeckte schwache Aufwickelfeder 17 an, die mit einer Federkraft von weniger als 2 Newton ausgebildet ist.

Mit der Welle ist ein eine Innenverzahnung aufweisendes Kupplungsrad 20 verbunden, in dessen Ebene eine Zahnscheibe 19 derart angeordnet ist, daß die Zahnscheibe 19 durch radiale Auslenkung in die Innenverzahnung des Kupplungsrades 20 einsteuerbar ist. Die Zahnscheibe 19 ist ihrerseits an einem Kupplungsrad 18 gehalten und an diesem hinsichtlich ihrer radialen Ausschwenkbewegung geführt. Auf das Kupplungsrad 18 arbeitet über ein nicht im einzelnen dargestelltes Vorgelege der Elektromotor 14.

Bei angelegtem Sicherheitsgurt übt die schwache Aufwickelfeder 17 nur eine entsprechend geringe Zugkraft auf das auf dem Körper des Fahrzeuginsassen aufliegende Gurtband aus; kommt es zu einer Fahrsituation, in welcher die Vorstraffung eingeleitet werden soll, wird der Elektromotor 14 mit einem entsprechenden Signal angesteuert und versetzt das Kupplungsrad 18 mit daran ausgebildeter Zahnscheibenführung in Drehung. Da der Elektromotor 14 entsprechend schnell bis ruckartig anläuft, kommt es zu einer radialen Auslenkung der an dem Kupplungsrad 18 geführten Zahnscheibe 19 bis zum Eingriff in die Innenverzahnung des mit der Gurtwelle 11 verbundenen Kupplungsrades 20, so daß das vom Elektromotor 14 in Aufwickeldrehrichtung der Gurtwelle 11 ausgeübte Drehmoment in eine Aufwickelbewegung der Gurtwelle 11 umgesetzt und dadurch der Sicherheitsgurt gestrafft wird. Wird der Sicherheitsgurt abgelegt, so erhält der Elektromotor 14 ebenfalls ein entsprechendes Signal, um das Gurtband in dessen Parkposition aufzuwickeln, und auch in diesem Betriebszustand treibt der Elektromotor 14 das Kupplungsrad 18 mit der daran geführten Zahnscheibe 19 an.

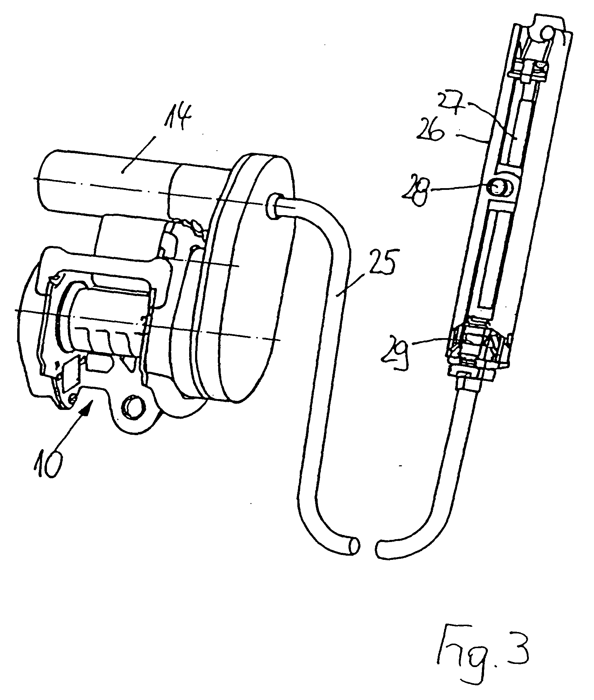

Bei dem in Fig. 3 dargestellten Ausführungsbeispiel ist zusätzlich an den Elektromotor 14 eine Höhenverstelleinrichtung angeschlossen, und zwar über eine zwischen der Höhenverstelleinrichtung und dem Elektromotor 14 verlegte flexible Welle 25. Wie nicht weiter dargestellt, ist zwischen der flexiblen Welle 25 und der Abtriebswelle des Elektromotors 14 ein schaltbares Getriebe angeordnet, um eine Zuschaltung der Höhenverstelleinrichtung an den Elektromotor 14 zu ermöglichen.

Die Höhenverstellvorrichtung besteht aus einem Gehäuse 26, in welchem ein Umlenkbeschlag 28 verschiebbar geführt ist, der bei dem dargestellten Ausführungsbeispiel als Halteteil für eine nicht im einzelnen dargestellte Umlenköse wiedergegeben ist. Der Umlenkbeschlag 28 ist auf einer Gewindestange 27 angeordnet, so daß über deren Drehung eine Verschiebung des Umlenkbeschlages 28 in dem Gehäuse 26 vorgenommen wird. Die Gewindestange 27 ist mittels einer Übertragungseinrichtung 29 an die flexible Welle 25 angeschlossen, so daß über die Drehung des Elektromotors 14 in der gewünschten Drehrichtung über die flexible Welle 25 die Gewindestange 27 in Drehung versetzt wird und dabei den Umlenkbeschlag 28 verschiebt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitsgurtsystem in Kraftfahrzeugen mit wenigstens einem Gurtaufroller (10), dessen Gurtwelle (11) über eine zwischengeschaltete Kupplung mit einem Elektromotor (14) kuppelbar ist, der die Gurtwelle (11) bei Zuschaltung in Aufwickelrichtung dreht, um in einem ersten Betriebszustand beim Ablegen des Sicherheitsgurtes das Gurtband in eine auf der Gurtwelle (11) aufgewickelte Parkposition zu bringen und um in einem zweiten Betriebszustand in Abhängigkeit von der jeweiligen Fahrsituation durch Gurtbandeinzug als Vorstraffung eine vorhandene Gurtlose zu beseitigen und dem angeschnallten Insassen ein fühlbares Warnsignal zu geben, wobei der Gurtaufroller (10) eine in Aufwickelrichtung des Gurtbandes wirksame Aufwickelfeder (17) aufweist, **dadurch gekennzeichnet, daß** der als in zwei Drehrichtungen Drehmomente übertragender Motor ausgebildete Elektromotor (14) über eine zwischengeschaltete Getriebestufe an einen in Abhängigkeit von Insassendaten steuerbaren Antrieb für die Höheneinstellung des oberen Umlenkbeschlages (28) zuschaltbar ist.

2. Sicherheitsgurtsystem nach Anspruch 1, **dadurch gekennzeichnet, daß** der Antrieb für die Höheneinstellung des Umlenkbeschlages (28) als eine vom Elektromotor (14) in der zugeordneten Schaltstellung des Getriebes in Rotation versetzte flexible Welle (25) ausgebildet ist, deren Drehbewegung getrieblich in eine Längsverschiebung des Umlenkbeschlages (28) umsetzbar ist.

3. Sicherheitsgurtsystem nach Anspruch 1 oder 2, **dadurch gekennzeichnet, daß** der Elektromotor (14) als schaltbarer Planetengetriebemotor ausgebildet ist.

4. Sicherheitsgurtsystem nach Ansprüche 1 bis 3, **dadurch gekennzeichnet, daß** in dem Sicherheitsgurtsystem zusätzlich eine Straffvorrichtung für eine in der Notsituation auszulösende Leistungsstraffung angeordnet ist.

5. Sicherheitsgurtsystem nach Anspruch 4, **dadurch gekennzeichnet, daß** die Straffvorrichtung zur Leistungsstraffung außerhalb des Gurtaufrollers angeordnet ist.

6. Sicherheitsgurtsystem nach Anspruch 4, **dadurch gekennzeichnet, daß** die Straffvorrichtung zur Leistungsstraffung auf die Gurtwelle des Gurtaufrollers (10) einwirkt.

7. Sicherheitsgurtsystem nach Anspruch 6, **dadurch gekennzeichnet, daß** die für die Leistungsstraffung vorgesehene Straffvorrichtung (12) über eine Strafferkupplung an die Gurtwelle (11) des Gurtaufrollers (10) ankuppelbar ist.

8. Sicherheitsgurtsystem nach Anspruch 7, **dadurch gekennzeichnet, daß** der Strafferantrieb der Straffvorrichtung (12) als Seilantrieb mit einem linear angetriebenen Kolben ausgebildet ist.

9. Sicherheitsgurtsystem nach Anspruch 6, **dadurch gekennzeichnet, daß** der Strafferantrieb der Straffvorrichtung (12) als Massekörperantrieb mit über ein verzahntes Antriebsrad geführten Massekörpern ausgebildet ist.

10. Sicherheitsgurtsystem nach einem der Ansprüche 1 bis 9, **dadurch gekennzeichnet, daß** die Aufwickelfeder (17) als mit einer Federkraft von weniger als zwei Newton schwach dimensionierte Feder ausgelegt ist.

## Claims

1. Seta belt system in motor vehicles, with at least one belt retractor (10), the belt shaft (11) of which can be coupled by way of an interposed clutch to an electric motor (14) turning the belt shaft (11) in the take-up direction when selected in order to transfer the belt webbing on removal of the seat belt to a parking position on the belt shaft (11) in a first operating state and to remove any belt slack in dependence on the current driving situation by retracting the belt webbing in a pre-tensioning process and to give a tangible warning signal to the buckled-up vehicle occupant in a second operating state, the belt retractor (10) incorporating a take-up spring (17) acting in the take-up direction of the belt webbing, **characterised in that** the electric motor (14), which is designed to transmit torque in two directions of rotation, can be selected via an interposed transmission stage as a drive controllable in dependence on vehicle occupant data for the vertical adjustment of the upper deflection fitting (28).

2. Seat belt system according to claim 1, **characterised in that** the drive for the vertical adjustment of the deflection fitting (28) is designed as a flexible shaft (25) caused to rotate by the electric motor (14) in the associated operating position of the transmission, its rotary movement being convertible into a longitudinal displacement of the deflection fitting (28) by the transmission.

3. Seat belt system according to claim 1 or 2, **characterised in that** the electric motor (14) is designed as a switchable planetary gear motor.

4. Seat belt system according to any of claims 1 to 3, **characterised in that** the seat belt system additionally includes a tensioning device for a power tensioning process to be triggered in an emergency situation.

5. Seat belt system according to claim 4, **characterised in that** the tensioning device for power tensioning is located outside the belt retractor.

6. Seat belt system according to claim 4, **characterised in that** the tensioning device for power tensioning acts on the belt shaft of the belt retractor (10).

7. Seat belt system according to claim 6, **characterised in that** the tensioning device (12) provided for power tensioning can be coupled to the belt shaft (11) of the belt retractor (10) by way of a tensioner clutch.

8. Seat belt system according to claim 7, **characterised in that** the tensioner drive of the tensioning device (12) is designed as a cable drive with a linearly driven piston.

9. Seat belt system according to claim 6, **characterised in that** the tensioner drive of the tensioning device (12) is designed as an inertial body drive with inertial bodies driven via a toothed drive gear.

10. Seat belt system according to any of claims 1 to 9, **characterised in that** the take-up spring (17) is designed as a low-powered spring with a spring force of less than two Newtons.

## Revendications

1. Système de ceinture de sécurité dans des véhicules à moteur comportant au moins un enrouleur de ceinture (10), dont l'arbre à courroie (11) peut être couplé, par l'intermédiaire d'un embrayage, à un électromoteur (14) qui, lorsqu'il est enclenché, fait tourner l'arbre à courroie (11) dans le sens d'enroulement afin de mettre, dans un premier état de fonctionnement, lorsqu'on enlève la ceinture de sécurité, la courroie dans une position de rangement enroulée sur l'arbre à courroie (11) et afin de remédier, dans un second état de fonctionnement qui dépend de la situation de conduite, à un relâchement avéré de la courroie par rétraction de la courroie faisant office de tension préalable et afin de délivrer à l'occupant attaché un signal d'alarme perceptible, l'enrouleur de ceinture (10) présentant dans le sens d'enroulement de la courroie un ressort d'enroulement (17) actif, **caractérisé en ce que** l'électromoteur (14) conformé en moteur transmettant des couples moteurs dans deux sens de rotation, peut être enclenché par l'intermédiaire d'un étage d'engrenage sur un entraînement piloté d'après les données relatives aux occupants pour le réglage en hauteur de l'organe de renvoi (28) supérieur.

2. Système de ceinture de sécurité selon la revendication 1, **caractérisé en ce que** l'entraînement pour le réglage en hauteur de l'organe de renvoi (28) est conformé en arbre (25) flexible mis en rotation par l'électromoteur (14) dans la position d'enclenchement correspondante de l'engrenage, dont le sens de rotation peut être converti par l'engrenage en translation longitudinale de l'organe de renvoi (28).

3. Système de ceinture de sécurité selon la revendication 1 ou 2, **caractérisé en ce que** l'électromoteur (14) est conformé en électroréducteur à train planétaire enclenchable.

4. Système de ceinture de sécurité selon les revendications 1 à 3, **caractérisé en ce qu'**il est en outre prévu dans le système de ceinture de sécurité un dispositif tendeur pour une mise en tension à haute efficacité à déclencher dans une situation d'urgence.

5. Système de ceinture de sécurité selon la revendication 4, **caractérisé en ce que** le dispositif tendeur pour la mise en tension à haute efficacité est disposé en dehors de l'enrouleur de courroie.

6. Système de ceinture de sécurité selon la revendication 4, **caractérisé en ce que** le dispositif tendeur pour la mise en tension à haute efficacité agit sur l'arbre à courroie de l'enrouleur (10) de ceinture.

7. Système de ceinture de sécurité selon la revendication 6, **caractérisé en ce que** le dispositif tendeur (12), prévu pour la mise en tension à haute efficacité, peut être couplé à l'arbre à courroie (11) de l'enrouleur de ceinture (10) par un dispositif d'accouplement propre au tendeur.

8. Système de ceinture de sécurité selon la revendication 7, **caractérisé en ce que** l'entraînement du tendeur du dispositif tendeur (12) est conformé en entraînement à câble muni d'un piston actionné linéairement.

9. Système de ceinture de sécurité selon la revendication 6, **caractérisé en ce que** l'entraînement du tendeur du dispositif tendeur (12) est conformé en entraînement pour corps de masse avec des corps de masse guidés sur une roue motrice dentée.

10. Système de ceinture de sécurité selon l'une des revendications 1 à 9, **caractérisé en ce que** le ressort d'enroulement (17) est conformé en ressort dimensionné faiblement, avec une force ressort de moins de deux Newton.
